# EUROPÄISCHE PATENTSCHRIFT

(11) **EP 2 353 751 B1**
(45) Veröffentlichungstag und Bekanntmachung des Hinweises auf die Patenterteilung: **05.12.2012**
(21) Anmeldenummer: 10153144.0
(22) Anmeldetag: 10.02.2010
(51) Int. Cl.: B22D 11/126, B23D 79/04, B23K 37/08

(54) **Entbartungssystem zum mechanischen Entfernen eines Schneidbartes an einem stranggegossenen Werkstück**
Burr removal system for mechanical removal of a cutting burr on a strand cast workpiece
Système d'ébarbage pour l'enlèvement mécanique d'une barbe de coupe sur une pièce usinée coulée en continu

(43) Veröffentlichungstag der Anmeldung: 10.08.2011
(73) Patentinhaber: GeGa GmbH, 65719 Hofheim (DE)
(72) Erfinder: Lotz, Horst Karl, 61462 Königstein (DE); Deica, Alexander, 65510 Hünstetten (DE); Rung, Jürgen, 26629 Großefehn (DE); Buhr, Wigbert, 56593 Horhausen (DE)
(74) Vertreter: Aue, Hans-Peter

(56) Entgegenhaltungen:
- EP-A2- 2 058 761
- EP-B1- 0 198 768
- US-A- 4 390 167
- US-A- 5 179 772

## Beschreibung

Die Erfindung bezieht sich auf ein Verfahren gemäß einem der Ansprüche 1-4 und eine Vorrichtung zum mechanischen Entfernen eines beim Autogenbrennschneiden an der Unterseite eines stranggegossenen Werkstückes entstehenden Bartes, mittels einer Entbartungsvorrichtung gemäß einem der Ansprüche 5-8 oder 9-11.

Mit dem zunehmenden Einsatz von Sauerstoffbrennschneiden in Stahlstranggießanlagen zum Unterteilen oder Längsteilen des heißen Stahlstranges in Werkstücke, wie Brammen, Blöcke und Knüppel, kommt dem maschinellen Entbarten eine große Bedeutung zu.

Beim Brennschneiden mit Sauerstoff entstehen an den beiden unteren Brennschnittkanten, also am Anfang und am Ende eines jeden vom Gießstrang abgetrennten Werkstückes durch die ablaufende und abkühlende Schneidschlacke mehr oder weniger große Bärte aus einem Gemisch spröder Eisenoxyde und hartem bis elastischem Stahl. Zum Teil hängen diese Bärte tief von den Kanten hinunter oder es bilden sich relativ flache Wulste an den Kanten benachbarter Teile der Werkstückunterflächen. Die Anwesenheit dieser Bärte stört sehr bei der Weiterbearbeitung und beim Transport der Werkstücke.

Es gibt daher eine Reihe von Verfahren, um die Bärte schon möglichst bald nach dem Brennschneiden zu entfernen, und zwar durch Abschmelzen oder Abbrennen, durch Abflämmen mit Hand-Sauerstoffbrenner oder Sauerstoffbrenner-Maschine, durch Abschlagen bzw. Abmeißeln von Hand oder Abschlagen, Abdrücken, Abscheren mit Maschinen, die mit hammer-, mei-βel- oder scherblattartigen Werkzeugen bestückt sind.

Während die Flämmentbartung vor allem durch eine hohe Entbartungsgeschwindigkeit Vorteile zeigt, so ist sie durch Rauchgasanfall, Schlackespritzer und Feuer- bzw. Explosionsgefahr erheblich benachteiligt. Daher wendet sich der Bedarf mehr den mechanischen Entbartungsverfahren zu.

Der einfachste, aus der EP 2 401 30 A bekannte mechanische Entbarter besteht aus einer um eine Drehwelle mit einer Scherkante gegen die Unterfläche des Werkstückes und den bei Bewegung der Drehwelle auf sie zufahrenden Bart drückenden Scherwippe. Mit der wippenartigen Ausführung und Drehung werden durch das Andrücken und Hochdrehen Höhenunterschiede zur Werkstückunterfläche ausgeglichen. Ballige Verformungen der Unterfläche werden vor allem bei flachen Bärten aber kaum ausgeglichen. Eine gute Entbartung ist jedoch auf eine geometrisch ebene Unterflächen begrenzt.

Aufwendiger ist eine Maschine mit an einem nach oben gedrückten Arm bei gleichzeitigem Vorschub hin und her schlagendem Scherblatt. Dieses schlägt entsprechend seiner Scherblattabmessung Bartstücke schrittweise ab. Die Kragarmausführung von beachtlicher Länge und die Zahl und Art der Bewegungen ergeben einen langsam arbeitenden Entbarter, der einen hohen Wartungsaufwand und einen hohen Platzbedarf hat.

Bei einer weiteren Entbartungsvorrichtung gemäß der EP 1 172 159 B1 wird ein walzenförmiger Entbarter mit aufgeschweißten Scherringen verwendet. Bei vorbeilaufenden Werkstück wird die Walze hochgedrückt und die nebeneinander und am Walzenkörper verteilt liegenden Scherringe heben das Werkstück an und scheren den Bart stückweise ab. Dabei kann immer nur ein Scherring auf der Walze arbeiten, bevor nach dem Absetzen des Werkstücks auf der Walze ein erneutes Anheben und Abscheren eines Bartstückes durch den nächsten Scherring erfolgt. Dieses Verfahren ist sehr laut und bedingt eine genaueste Lage des Werkstückes zum Entbarten. Zudem ist es insgesamt sehr zeitaufwendig.

Ein besonders schnelles aber auch lautes Entbarten gemäß der EP 198 768 B1, der US 4 390 167 A und der US 5 179 772 A erfolgt mit am Umfang einer schnell drehenden Walze befestigten Hämmern, die den Bart an der Unterkante des über die Walze laufenden Werkstückes mit hoher Schlagzahl in kleinen Stücken abschlagen. Hoher Verschleiß und erforderlicher Schutz gegen wegfliegende Bart- und Hammerteile sowie gegen Lärm sind neben den Anlagekosten die wesentlichen Nachteile. Alle vorgenanten Methoden haben zusätzlich den Nachteil der Beschränkung auf einfache Querschnitte.

Der effektivste Entbarter für ein schnelles Entbarten an ohne Stopp durchlaufendem Werkstück mit geringstem Platzbedarf im Rollgang ist der Rotationsentbarter mit dem schnelldrehenden, mit Hämmern bestückten Rotor gemäß der EP 198 768 B1. Da aber der Bart am Werkstück durch die vielen kleinen Hämmer oft und ungleichmäßig mit enormer Kraft und Geschwindigkeit durchbrochen wird, entsteht ein sehr großer Lärm. Der Verschleiß ist unverhältnismäßig hoch und oft kommt es zu Zerstörungen von Hämmern. Häufig kommt es zum Hochklappen und somit zum Nichtentfernen von Bartteilen. Der Wartungsaufwand ist durch den Austausch oder Ersatz der kleinen Hämmer und das erneute Anbringen von Schutzblechen gegen mit hoher Energie wegfliegenden Bartresten oder Hammerteilen besonders hoch.

Bedingt durch den thermischen Produktionsprozess in einer Stranggießanlage, etwa durch die dabei entstehende hohe Temperatur, Abkühlung, Rollengangtransport, Schneidprozess usw., ist das heiße Werkstück und somit auch der vom Werkstück abzutrennende Bart um mehrere Millimeter nach oben oder unten gebogen. Wenn der abzutrennende Bart getroffen werden soll, muss der Entbarter in die obere Position fahren und entbarten. Aber bei Werkstücken, die nach unten gebogen sind, wird zwangsläufig auch in die Unterseite der Werkstückfläche geschlagen, was zu Beschädigungen führt, die jedoch vermieden werden sollen.

Weiterhin ist aus der EP 2 058 761 ein Verfahren und System zur Bestimmung der dreidimensionalen Position eines Objekts in einer Szene bekannt. Hierbei werden eine oder mehrere Kameras verwendet, welche die Position des Objektes in einem bestimmten Zustand erfassen, die dann ausgewertet wird.

Es ist Aufgabe der Erfindung, ein Verfahren und eine Vorrichtung der eingangs genannten Art zu schaffen, die auf herstellungstechnisch einfache und kostengünstige Art ein gleichmäßig fortlaufendes und gedämpfteres Entfernen von Sauerstoffschneidbärten nach dem thermochemischen Querteilen oder Längsteilen von stählernen Werkstücken, wie Blöcke, Brammen und Knüppel, ermöglicht, um das vom Schneidbart zu entfernende Werkstück weitestgehend vor Beschädigungen zu schützen.

Erfindungsgemäß wird die Aufgabe verfahrensgemäß dadurch gelöst, dass während des Werkstücktransports in einem Rollengang ohne Werkstückstopp sich die Schlagmesser ohne vor dem eigentlichen Entbartungsvorgang rotieren zu müssen bereits in Bearbeitungsposition befinden, wobei die Lage, Form und Größe des zu entfernenden Bartes mittels eines neben dem Rollgang platzierten Erkennungssystems, bestehend aus einer Laser-Triangulation-Messeinrichtung in Verbindung mit einer 3-Dimensionalkamera, exakt analysiert und rechnergesteuert die Schlagmesser in die für die Lage, Form und Größe des Bartes geeignete Position zum Schneidbartentfernen gebracht werden und anschließend die Schlagmesser durch Rotation der Schlagmesserwelle gegen die gegen den Sauerstoffschneidbart des Werkstückes schlagen und diesen entfernen.

Somit wird die Entbartervorrichtung variabel an die unmittelbar zuvor durch ein Erkennungssystem erfasste Werkstückunterkante herangeführt, nämlich durch die Schritte:
- Erfassung des Werkstückes, eine Rollengangbreite zuvor,
- Errechnen der ermittelten Abweichung von einem Sollwert,
- Positionieren eines variablen Anschlages der Entbartervorrichtung,
- Heranführen der Rotationskörper der Entbartervorrichtung bei Erreichen des nächsten Rollenganges an die exakte Startposition, nämlich an die Unterkante des den zu entfernenden Bart aufweisenden Werkstückes.

Durch das Bartentfernungsverfahren zum Entfernen eines Sauerstoffschneidbartes werden die Schlagmesser definiert, bezogen auf die Größe und Form des Schneidbartes, beim laufenden Produktionsprozess an dem zu entfernenden Bart positioniert, wobei der Brennbart ohne nennenswerten nachteiligen Werkstückkontakt entfernt wird. Dabei handelt es sich um ein Inline-Verfahren, d.h. der Entbartungsvorgang findet innerhalb eines Rollengangs eine Gießstranganlage statt.

Gemäß einer weiteren Ausgestaltung des erfindungsgemäßen Verfahrens werden die Schlagmesser durch vertikale Verschiebung stufenlos variabel an den Bart bzw. die Werkstückunterkante elektromotorisch, hydraulisch oder pneumatisch positioniert. Die Höhenposition der Schlagmesser erfolgt für jede neue Bartlage und Bartgröße. Hierbei können auch Vorpositionen stufenlos variabel angefahren werden.

Weiterhin werden die Schlagmesser durch vertikale Verschiebung elektromotorisch, pneumatisch oder hydraulisch gegen den in vertikaler Richtung definierten, schrittweise über den gesamten Bearbeitungsbereich variablen Anschlag, der elektromotorisch, hydraulisch oder pneumatisch verschiebbar angeordnet ist, positioniert.

Um die exakte Position der Schlagmesserwelle der Entbartervorrichtung, d.h. deren Bearbeitungsposition festzulegen, wird ein variabler Anschlag verwendet. Zuerst wird mit dem Messsystem die Unterkante des Werkstückes erfasst und dann der Entbartervorrichtung mitgeteilt, wo der variable Anschlag exakt positioniert sein soll. Dieser wird beispielsweise über einen Elektromotor als Antriebseinheit, oder mechanische Verstellung, beispielsweise Hub-Drehzylinder mit ausfahrbaren Bolzen, in die ermittelte Position verstellt. Der Hubzylinder dreht beispielsweise einfach einen Vierkantklotz, der unterschiedliche Abmessungen vom Zentrum zur Anschlagfläche besitzt. Dabei fährt dann die Schlagmesserwelle immer auf einen bestimmten Punkt, der begrenzt wird durch den Anschlag. Über eine Anzahl unterschiedlicher Schrittpositionen kann eine Distanz von mehreren Millimetern eingestellt werden.

Mit einer Entbartervorrichtung wird die Aufgabe gelöst durch mindestens einen auf einer Welle angeordneten Rotationskörper, der aus zwei sich gegenüberliegenden, jeweils in mehrere Ringsegmente unterteilten Kreisringen besteht, zwischen denen die Schlagmesser radial nach außen gerichtet angeordnet sind, und zwischen der Welle und dem Rotationskörper eine Anzahl von Drahtseilaufhängungen unter einer definierten Vorspannkraft elastisch federnd positioniert sind, weiterhin durch einen variablen Anschlag zur Begrenzung der Bewegung der Schlagmesserwelle und durch ein Erkennungssystems, bestehend aus einer Laser-Triangulation-Messeinrichtung in Verbindung mit einer 3-Dimensionalkamera.

Die Unterteilung der Kreisringe in Ringsegmente erfolgt vorzugsweise zur Erleichterung der Montage und Wartung des Rotationskörpers der Entbartervorrichtung.

Durch die unter einer definierten Vorspannkraft elastischen Drahtseilaufhängungen montierten Schlagmesserringe wird das komplette rotierende Massenträgheitsmoment aller Komponenten eines Schlagmesserringes auf das eine, jeweils entbartende Schlagmesser übertragen. Dabei wird erreicht, dass die durch diese konstruktive Schlagmesserverbindung entstandene Entbartungsschlagkraft für die Bartentfernung eine deutlich geringere Rotordrehzahl gegenüber einzeln angeordneten Schlagmessern erfordert und die abgeschlagenen Bartstücke geringer beschleunigt werden.

Bevorzugt sind die benachbarten Ringsegmente durch jeweils ein Verschlusselement zu dem Kreisring verbunden.

Des Weiteren ist es vorteilhaft, dass der Kreisring einzeln, oder nur einzelne vormontierte Ringsegmente oder einzelne Schlagmesser unabhängig voneinander montierbar, demontierbar oder austauschbar sind.

Bei einer vorteilhaften Ausgestaltung der Vorrichtung sind die Schlagmesser tragenden Kreisringe durch die elastisch federnden Drahtseilaufhängungen mit nach innen geneigten schlaufenartigen Drahtseilen und durch an der Welle befestigte mechanische Führungen gegen axiale Verschiebung gesichert, so dass alle Schlagmesser immer den gleichen Axialabstand untereinander aufweisen. Dadurch entsteht ein gleichmäßig gutes Entbartungsergebnis am Werkstück.

Alternativ wird die Aufgabe mittels einer Entbartervorrichtung dadurch gelöst, dass auf einer im Querschnitt vielkantigen Welle eine erste Anzahl von Drahtseilaufhängungen, eine zweite Anzahl von Drahtseilaufhängungen daneben oder auf Lücke versetzt zur ersten Anzahl von Drahtseilaufhängungen usw. unter einer definierten Vorspannkraft elastisch federnd positioniert sind und an jeder Drahtseilaufhängung ein radial nach außen gerichtetes Schlagmesser angeordnet ist, weiterhin ein Erkennungssystems, bestehend aus einer Laser-Triangulation-Messeinrichtung in Verbindung mit einer 3-Dimensionalkamera. Somit entsteht eine rotierende Walze mit einer Mehrzahl von flexiblen Messern. Hierbei kann es vorteilhaft sein, wenn zwischen der ersten Anzahl von Drahtseilaufhängungen mit Schlagmessern und der zweiten Anzahl von Drahtseilaufhängungen usw. jeweils eine Führungsscheibe angeordnet und vorzugsweise auf der vielkantigen Welle befestigt ist, um ein gegenseitiges Aneinanderschlagen der auf der Welle benachbarten Schlagmesser zu vermeiden.

Nach einer bevorzugten Ausgestaltung der erfindungsgemäßen Entbartervorrichtung ist die Welle vorzugsweise als Achtkantwelle ausgebildet, wobei vier Drahtseilaufhängungen mit Schlagmessern gleichmäßig am Umfang verteilt auf jeder zweiten Fläche der Achtkantwelle und daneben um 45° versetzt vier weitere Drahtseilaufhängungen mit Schlagmessern auf jeder zweiten Fläche der Achtkantwelle angeordnet sind usw. bis die Breite des zu entbartenden Werkstückes erreicht ist.

Diese Ausbildung der Drahtseilaufhängungen unmittelbar auf einer vielkantigen Welle ist zwar erheblich einfacher im konstruktiven Aufbau, erfordert aber eine höhere Drehzahl der Welle als bei der zuvor beschriebenen Entbartervorrichtung. Die Drahtseilaufhängungen mit den Schlagmessern können sich einzeln frei bewegen. Durch das straffe Seil wird das Schlagmesser bereits in Bearbeitungsposition gehalten. Wenn die Welle rotiert, streben die Schlagmesser an den Drahtseilaufhängungen durch die Fliehkraft nach außen, wobei sich die Seile straff spannen und dabei die Schlagmesser positionieren, aber immer noch elastisch nach allen Seiten hin beweglich halten.

Vorteilhafterweise wird der gebildete Schlagmesserring durch mehrere Drahtseilaufhängungen nur durch die geometrische Form des Drahtseils temperaturunabhängig zentrisch gehalten.

Nach einer Weiterbildung der Erfindung besteht jede Drahtseilaufhängung aus vier Klemmplatten mit jeweils halbrunden Haltenuten und halbrunden Halbkreisnuten und mindestens einem darin eingelegten Drahtseilstück, das an den Enden mit Pressklemmen verpresst und verschweißt ist, wobei die Klemmplatten mit Aussparungen für die Pressklemmen der Drahtseilenden versehen sind.

Um ein gedämpfteres Entfernen von Sauerstoffschneidbärten nach dem thermochemischen Querteilen oder Längsteilen von stählernen Werkstücken zu erreichen, weist die Oberfläche des Schlagmessers sich nach außen verjüngend und quer zur Drehrichtung verlaufende Schneidabsätze auf, sodass am Schlagmesser mehrere Schneidkanten gebildet sind.

Alternativ sind die Messerkanten in mehrere Abschnitte unterbrochen bzw. versetzt zueinander ausgebildet, sodass am Schlagmesser mehrere Schneidkanten gebildet sind.

Durch die so ausgebildeten Schlagmesser werden die Kräfte nicht schlagartig, sondern stufenweise auf den abzuschneidenden Bart am Werkstück übertragen. Dies wird angestrebt, weil die Bärte nicht gleichmäßig sind. Der Bart wird gewissermaßen erst ein wenig gelockert und dann weiter abgeschlagen.

Die Schlagmesserkanten sind mit einem negativem Schneidwinkel versehen, um bei einer unkontrollierten Werkstückberührung keine nennenswerte Werkstückbeschädigung hervorzurufen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: eine Vorderansicht einer Entbartervorrichtung zum mechanischen Entfernen eines beim Autogenbrennschneiden an der Unterseite eines stranggegossenen Werkstückes entstehenden Bartes,
- Fig. 2: eine Draufsicht der Entbartervorrichtung gemäß Fig. 1,
- Fig. 3: eine Seitenansicht der hydraulisch betätigten Entbartervorrichtung gemäß Fig. 1,
- Fig. 4: eine Seitenansicht der pneumatisch betätigten Entbartervorrichtung gemäß Fig. 1,
- Fig. 5: eine vergrößerte Teilvorderansicht der Entbartervorrichtung gemäß Fig. 4,
- Fig. 6: eine vergrößerte Teilseitenansicht der Entbartervorrichtung gemäß Fig. 4,
- Fig. 7: eine Vorderansicht eines mit Schlagmessern bestückten Rotationskörpers der Entbartervorrichtung in einer ersten Ausführungsform,
- Fig. 8: eine Seitenansicht des Rotationskörpers gemäß Fig. 7,
- Fig. 9: eine Vorderansicht eines mit Schlagmessern bestückten Rotationskörpers der Entbartervorrichtung in einer zweiten Ausführungsform,
- Fig. 10: eine Seitenansicht des Rotationskörpers gemäß Fig. 9,
- Fig. 11: eine linke Seitenansicht einer Drahtseilaufhängung für einen Rotationskörper der Entbartervorrichtung,
- Fig. 12: eine Vorderansicht der Drahtseilaufhängung gemäß Fig. 11,
- Fig. 13: eine rechte Seitenansicht der Drahtseilaufhängung gemäß Fig. 12,
- Fig. 14: eine Draufsicht der Drahtseilaufhängung gemäß Fig. 11,
- Fig. 15: eine Vorderansicht eines beispielhaften Schlagmessers für die Entbartervorrichtung in einer ersten Ausführungsform,
- Fig. 16: eine Seitenansicht des Schlagmessers gemäß Fig. 15,
- Fig. 17: eine Draufsicht des Schlagmessers gemäß Fig. 15,
- Fig. 18: eine Einzelheit Z gemäß Fig. 16,
- Fig. 19: eine Vorderansicht eines beispielhaften Schlagmessers für die Entbartervorrichtung in einer zweiten Ausführungsform und
- Fig. 20: eine Draufsicht des Schlagmessers gemäß Fig. 19.

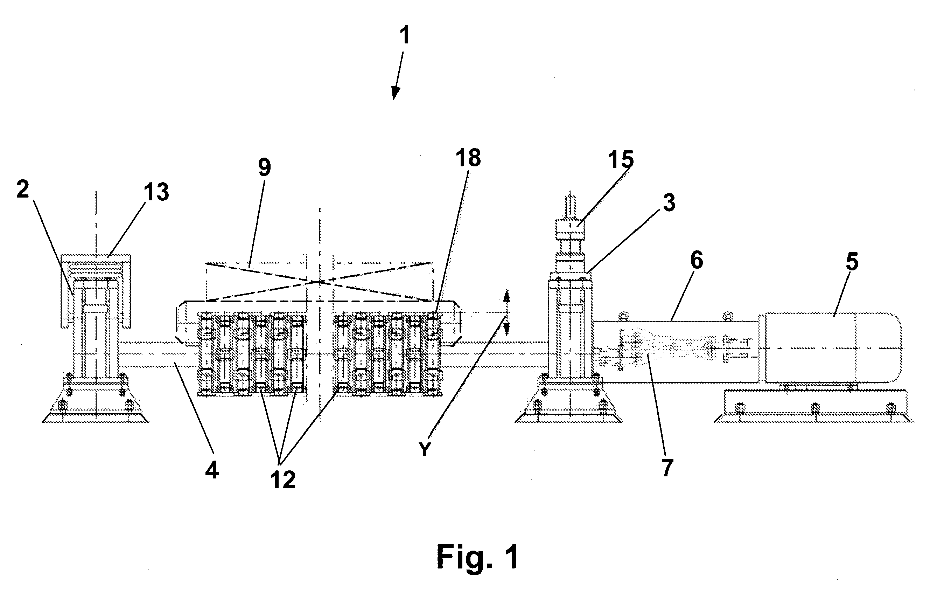

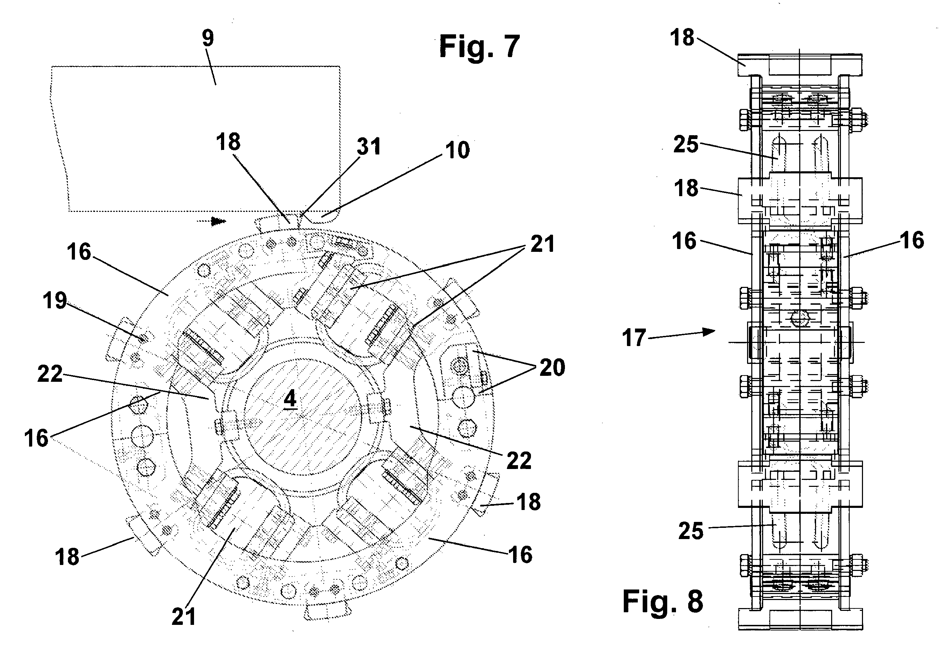

Die in den Fig. 1 bis 6 dargestellte Entbartervorrichtung 1 besteht im Wesentlichen aus einer linken Tragsäule 2 und einer dazu beabstandeten rechten Tragsäule 3. Eine Welle 4 ist zwischen den beiden Tragsäulen 2 und 3 gelagert, die von einem Antriebsmotor 5 über eine von einem Schutzkasten 6 umgebenen Antriebswelle 7 rotierbar angetrieben wird. Zwischen den beiden Tragsäulen 2 und 3 verläuft quer dazu ein Rollengang 8 einer nicht näher dargestellten Stranggießanlage. In dieser wird der heiße gegossene Stahlstrang durch eine nicht gezeigte autogene Sauerstoff-Brennschneidmaschine in Werkstück 9, wie Blöcke, Brammen oder Knüppel, unterteilt. Dabei bildet sich an der Unterkante des Werkstückes 9 ein Sauerstoffschneidbart 10, nachfolgend als "Bart" bezeichnet, wie in Fig. 7 dargestellt.

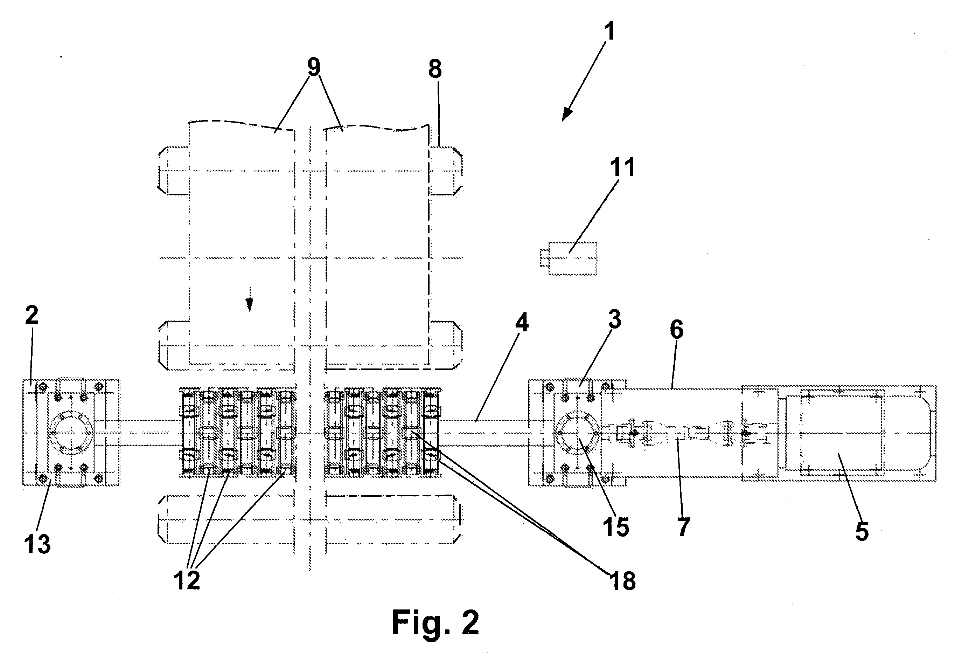

Seitlich des Rollenganges 8 ist in Transportrichtung des Werkstückes 9 vor der Entbartervorrichtung 1 ein Erkennungssystem 11 angeordnet, wie aus Fig. 2 zu ersehen ist. Dieses besteht vorzugsweise aus einer an sich bekannten Laser-Triangulation-Messeinrichtung in Kombination mit einer 3-Dimensionalkamera.

Auf der Welle 4 sind eine Mehrzahl von Rotationskörpern 12 angeordnet und zwar so viele, dass diese die Breite des zu entbartenden Werkstückes 9 abdecken. Die Rotationskörper 12 sind vorgesehen, den Bart am Werkstück 9 abzuschlagen.

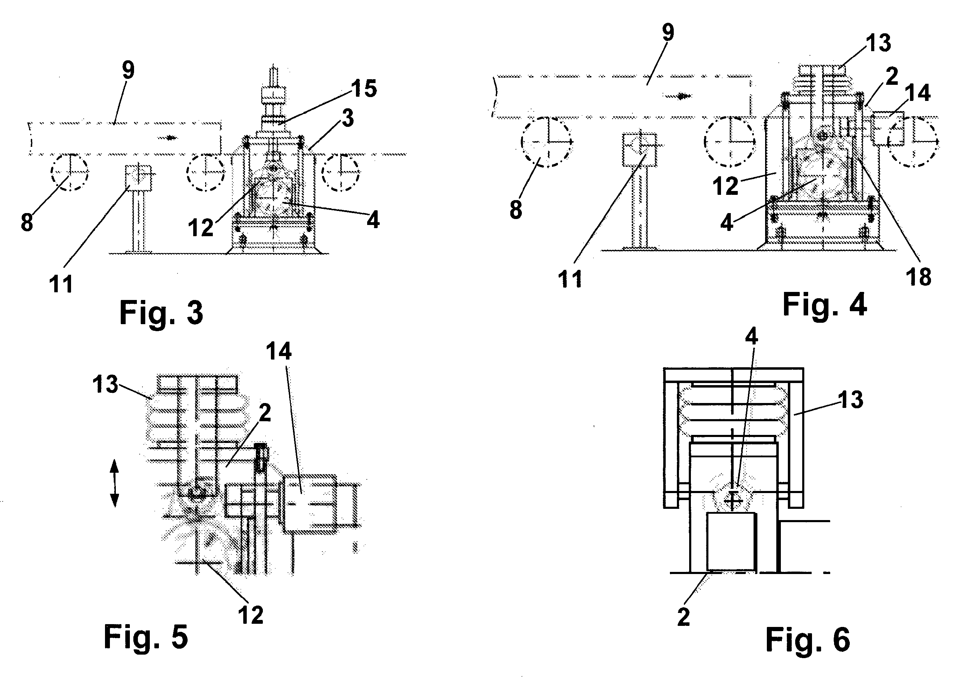

Die Tragsäulen 2, 3 weisen gemäß den Fig. 4 bis 6 einen variablen Anschlag 13 auf, der in vertikaler Richtung elektromotorisch, hydraulisch 14 oder pneumatisch über den gesamten Bearbeitungsbereich, d.h. den Entbartungsbereich, verstellbar ist. Der Anschlag 13 kann stufenlos oder schrittweise in vertikaler Richtung verschoben werden.

Der in den Tragsäulen 2, 3 integrierte Antrieb kann hydraulisch 15, pneumatisch oder motorisch die die Rotationskörper 12 tragende Welle 4 in vertikaler Richtung Y bewegen, um die Rotationskörper 12 relativ zum zu entbartenden Werkstück 9 stufenlos oder schrittweise zu positionieren, und zwar sowohl in Vorpositionen als auch in Bearbeitungsposition.

In einer ersten Ausführungsform besteht der Rotationskörper 12 gemäß den Fig. 7 und 8 aus zwei sich gegenüberliegenden, jeweils in mehrere Ringsegmente 16 unterteilten Kreisringen 17, zwischen denen Schlagmesser 18 radial nach außen gerichtet und umfangsseitig angeordnet und mittels Stiftverbindungen 19 an den Kreisringen 17 befestigt sind. Die jeweils benachbarten Ringsegmente 16 sind durch jeweils ein Verschlusselement 20 zu dem Kreisring 17 verbunden.

Zwischen der Welle 4 und dem Rotationskörper 12 sind eine Anzahl von Drahtseilaufhängungen 21 unter einer definierten Vorspannkraft elastisch federnd befestigt. Die Kreisringe 17 sind durch die elastisch federnden Drahtseilaufhängungen 21 und durch an der Welle 4 befestigte mechanische Führungen 22 gegen axiale Verschiebung gesichert. Dadurch bilden alle Schlagmesser 18 immer den gleichen Axialabstand untereinander.

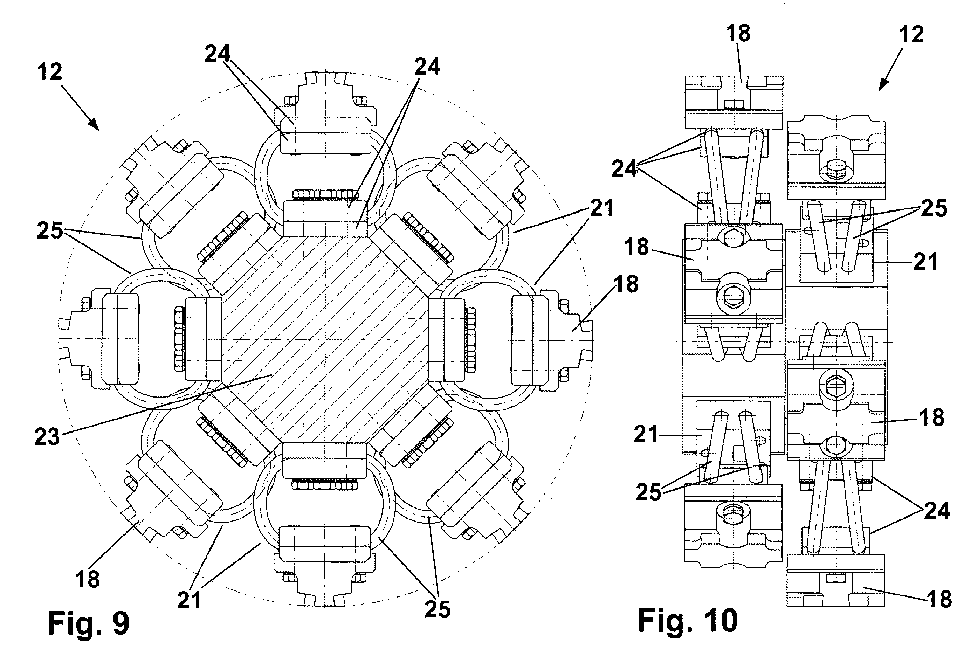

Bei der zweiten Ausführungsform des Rotationskörpers 12 gemäß den Fig. 9 und 10 sind auf einer im Querschnitt vielkantigen Welle 23 eine erste Anzahl von Drahtseilaufhängungen 21 und eine zweite Anzahl von Drahtseilaufhängungen 21 auf Lücke in einem Winkel von 45° versetzt zur ersten Anzahl von Drahtseilaufhängungen 21 befestigt. Dieser Versatz von jeweils einer Gruppe von Drahtseilaufhängungen 21 setzt sich auf der Welle 23 solange fort, bis die Bearbeitungsbreite, d.h. mindestens die Breite des zu entbartenden Werkstückes 9, erreicht ist. Dadurch sind eine Vielzahl von Rotationskörpern 12 mit jeweils zueinander versetzten Schlagmessern 18 nebeneinander auf der Welle 23 angeordnet und der Bart 10 des Werkstückes 9 kann bei Rotation der Welle 23 vollständig abgeschlagen werden. Die Drahtseilaufhängungen 21 sind unter einer definierten Vorspannkraft elastisch federnd positioniert, wobei an jeder Drahtseilaufhängung 21 ein radial nach außen gerichtetes Schlagmesser 18 befestigt ist.

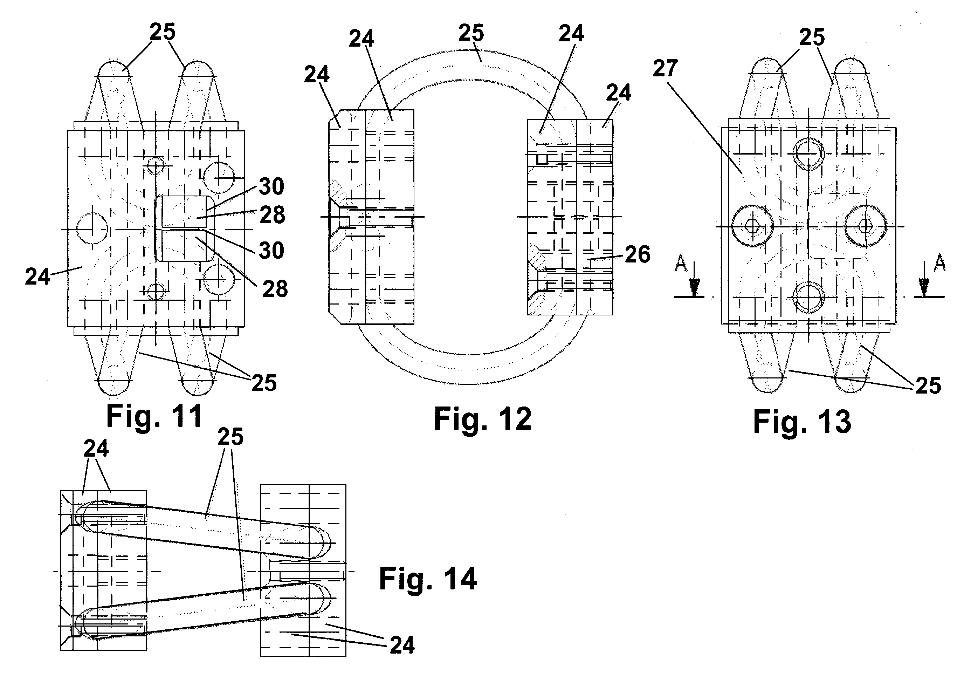

Wie in den Fig. 11 bis 14 dargestellt ist, besteht jede Drahtseilaufhängung 21 aus vier Klemmplatten 24, wobei jeweils zwei Klemmplatten 24 ein Paar bilden und zwischen jedem Paar ein Drahtseil 25 verläuft. Die Klemmplatten 24 weisen jeweils halbrunde Haltenuten 26 und halbrunden Halbkreisnuten 27 und mindestens ein darin eingelegten Drahtseilstück 25 auf. Die Enden des Drahtseils 25 sind mittels Pressklemmen 28 verpresst und verschweißt, wobei die Klemmplatten 24 mit Aussparungen 29 für die Pressklemmen 28 versehen sind.

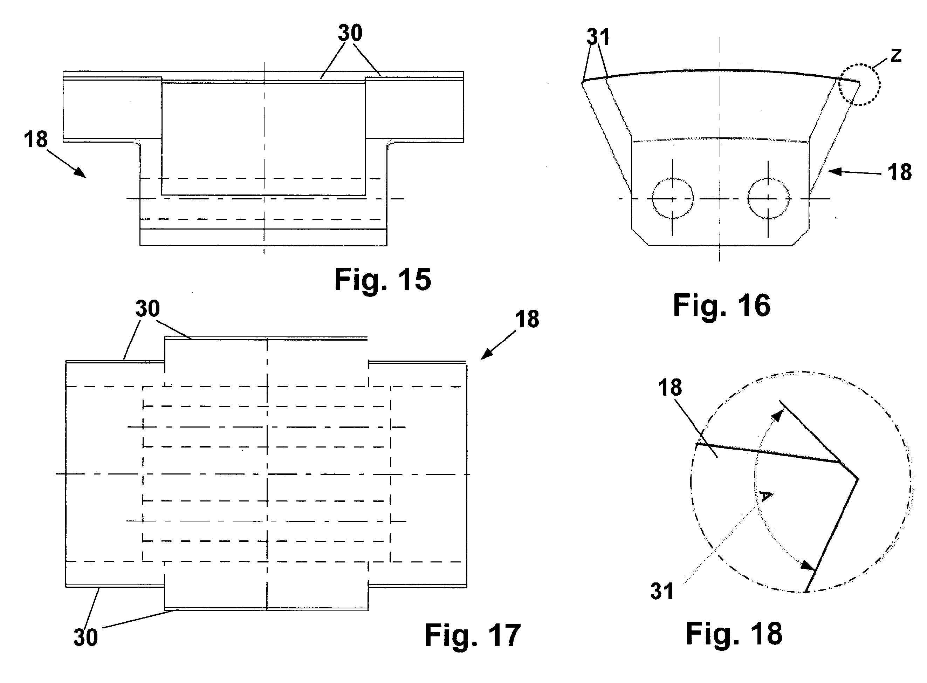

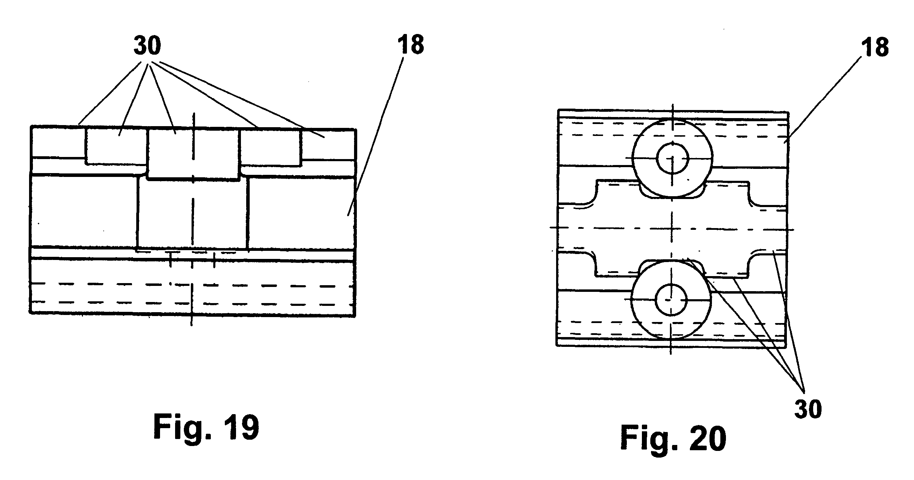

Die Fig. 15 bis 20 zeigen beispielhaft zwei verschiedene Ausführungen von Schlagmessern 18 zur Befestigung an einer Drahtseilaufhängung 21. Dabei können die Messerkanten in mehrere Abschnitte unterbrochen bzw. versetzt zueinander ausgebildet sein. Dadurch bilden sich am Schlagmesser 18 mehrere Schneidkanten 30. Darüber hinaus besitzen die Schneidkanten 30 des Schlagmessers 18 einen negativen Schneidwinkel 31.

### Liste der Bezugszeichen

- 1: Entbartervorrichtung
- 2: linke Tragsäule
- 3: rechte Tragsäule
- 4: Welle
- 5: Antriebsmotor
- 6: Schutzkasten
- 7: Antriebswelle
- 8: Rollengang
- 9: Werkstück
- 10: Bart
- 11: Erkennungssystem
- 12: Rotationskörper
- 13: Anschlag
- 14: Hydraulik
- 15: Hydraulik
- 16: Ringsegment
- 17: Kreisring
- 18: Schlagmesser
- 19: Stiftverbindung
- 20: Verschlusselement
- 21: Drahtseilaufhängung
- 22: mechanische Führung
- 23: Welle
- 24: Klemmplatte
- 25: Drahtseil
- 26: Haltenut
- 27: Halbkreisnut
- 28: Pressklemme
- 29: Aussparung
- 30: Schneidkante
- 31: Schneidwinkel

## Patentansprüche

1. Verfahren zum mechanischen Entfernen eines beim Autogenbrennschneiden an der Unterseite eines stranggegossenen Werkstückes (9) entstehenden Bartes (10), mittels einer Entbartungsvorrichtung gemäß einem der Ansprüche 5-8 oder 9-11, **dadurch gekennzeichnet, dass** während des Werkstücktransports in einem Rollengang (8) ohne Werkstückstopp sich die Schlagmesser (18) ohne vor dem eigentlichen Entbartungsvorgang rotieren zu müssen bereits in Bearbeitungsposition befinden, wobei die Lage, Form und Größe des zu entfernenden Bartes (10) mittels eines neben dem Rollgang (8) platzierten Erkennungssystems (11), bestehend aus einer Laser-Triangulation-Messeinrichtung in Verbindung mit einer 3-Dimensionalkamera, exakt analysiert und rechnergesteuert die Schlagmesser (18) in die für die Lage, Form und Größe des Bartes (10) geeignete Position zum Schneidbartentfernen gebracht werden, und anschließend die Schlagmesser (18) durch Rotation der Schlagmesserwelle (4,23) gegen die gegen den Sauerstoffschneidbart (10) des Werkstückes (9) schlagen und diesen entfernen.

2. Verfahren nach Anspruch 1, **dadurch gekennzeichnet, dass** die Entbartervorrichtung (1) variabel an die unmittelbar zuvor durch ein Erkennungssystem (11) erfasste Werkstückunterkante herangeführt wird, nämlich durch die Schritte:
- Erfassung des Werkstückes (9), eine Rollengangbreite zuvor,
- Errechnen der ermittelten Abweichung von einem Sollwert,
- Positionieren eines variablen Anschlages (13) der Rotationskörper (12) der Entbartervorrichtung (1),
- Heranführen der Entbartervorrichtung (1) bei Erreichen des nächsten Rollenganges an die exakte Startposition, nämlich an die Unterkante des den zu entfernenden Bart (10) aufweisenden Werkstückes (9).

3. Verfahren nach Anspruch 1, **dadurch gekennzeichnet, dass** die Schlagmesser (18) durch vertikale Verschiebung stufenlos variabel an den Bart (10) bzw. die Werkstückunterkante elektromotorisch, hydraulisch oder pneumatisch positioniert werden und die Höhenposition der Schlagmesser (18) für jede neue Bartlage und Bartgröße erfolgt.

4. Verfahren nach Anspruch 1, **dadurch gekennzeichnet, dass** die Schlagmesser (18) durch vertikale Verschiebung elektromotorisch, pneumatisch oder hydraulisch gegen den in vertikaler Richtung definierten, schrittweise über den gesamten Bearbeitungsbereich variablen Anschlag (13), der elektromotorisch, hydraulisch oder pneumatisch verschiebbar angeordnet ist, positioniert werden.

5. Entbartervorrichtung zum mechanischen Entfernen eines beim Autogenbrennschneiden an der Unterseite eines stranggegossenen Werkstückes (9) entstehenden Bartes (10), mittels einer Anzahl von rotierenden, kreisförmig angeordneten Schlagmessern (18) , **gekennzeichnet durch** mindestens einen auf einer Welle (4) angeordneten Rotationskörper (12), der aus zwei sich gegenüberliegenden, jeweils in mehrere Ringsegmente (16) unterteilten Kreisringen (17) besteht, zwischen denen die Schlagmesser (18) radial nach außen gerichtet angeordnet sind, und zwischen der Welle (4) und dem Rotationskörper (12) eine Anzahl von Drahtseilaufhängungen (21) unter einer definierten Vorspannkraft elastisch federnd positioniert sind, weiterhin **durch** einen variablen Anschlag (13) zur Begrenzung der Bewegung der Schlagmesserwelle (23) und **durch** ein Erkennungssystems (11), bestehend aus einer Laser-Triangulation-Messeinrichtung in Verbindung mit einer 3-Dimensionalkamera.

6. Entbartervorrichtung nach Anspruch 5, **dadurch gekennzeichnet, dass** die benachbarten Ringsegmente (16) durch jeweils ein Verschlusselement (20) zu dem Kreisring (17) verbunden sind.

7. Entbartervorrichtung nach Anspruch 5, **dadurch gekennzeichnet, dass** der Kreisring (17) einzeln, oder nur einzelne vormontierte Ringsegmente (16) oder einzelne Schlagmesser (18) unabhängig voneinander montierbar, demontierbar oder austauschbar sind.

8. Entbartervorrichtung nach Anspruch 5, **dadurch gekennzeichnet, dass** die Schlagmesser (18) tragenden Kreisringe (17) durch die elastisch federnden Drahtseilaufhängungen (21) mit nach innen geneigten schlaufenartigen Drahtseilen (25) und durch an der Welle (4) befestigte mechanische Führungen (22) gegen axiale Verschiebung gesichert sind, so dass alle Schlagmesser (18) immer den gleichen Axialabstand untereinander aufweisen.

9. Entbartervorrichtung zum mechanischen Entfernen eines beim Autogenbrennschneiden an der Unterseite eines stranggegossenen Werkstückes (9) entstehenden Bartes (10), mittels einer Anzahl von rotierenden, kreisförmig angeordneten Schlagmessern (18) , **dadurch gekennzeichnet, dass** auf einer im Querschnitt vielkantigen Welle (23) eine erste Anzahl von Drahtseilaufhängungen (21), eine zweite Anzahl von Drahtseilaufhängungen (21) daneben oder auf Lücke versetzt zur ersten Anzahl von Drahtseilaufhängungen (21) usw. unter einer definierten Vorspannkraft elastisch federnd positioniert sind und an jeder Drahtseilaufhängung (21) ein radial nach außen gerichtetes Schlagmesser (18) angeordnet ist, weiterhin ein Erkennungssystems (11), bestehend aus einer Laser-Triangulation-Messeinrichtung in Verbindung mit einer 3-Dimensionalkamera.

10. Entbartervorrichtung nach Anspruch 9, **dadurch gekennzeichnet, dass** die Welle (23) vorzugsweise als Achtkantwelle ausgebildet ist, wobei vier Drahtseilaufhängungen (21) mit Schlagmessern (18) gleichmäßig am Umfang verteilt auf jeder zweiten Fläche der Achtkantwelle und daneben um 45° versetzt vier weitere Drahtseilaufhängungen (21) mit Schlagmessern (18) auf jeder zweiten Fläche der Achtkantwelle angeordnet sind usw. bis die Breite des zu entbartenden Werkstückes (9) erreicht ist.

11. Entbartervorrichtung nach Anspruch 5 oder 9, **dadurch gekennzeichnet, dass** jede Drahtseilaufhängung (21) aus vier Klemmplatten (24) mit jeweils halbrunden Haltenuten (26) und halbrunden Halbkreisnuten (27) und mindestens einem darin eingelegten Drahtseilstück (25) besteht, das an den Enden mit Pressklemmen (28) verpresst und verschweißt ist, wobei die Klemmplatten (24) mit Aussparungen (29) für die Pressklemmen (28) der Drahtseilenden versehen sind.

12. Entbartervorrichtung nach einem der Ansprüche 5-8 oder 9-11, **dadurch gekennzeichnet, dass** die Oberfläche des Schlagmessers (18) sich nach außen verjüngend und quer zur Drehrichtung verlaufende Schneidabsätze aufweist, sodass am Schlagmesser (18) mehrere Schneidkanten (30) gebildet sind.

13. Entbartervorrichtung nach Anspruch 12, **dadurch gekennzeichnet, dass** die Messerkanten in mehrere Abschnitte unterbrochen bzw. versetzt zueinander ausgebildet sind, sodass am Schlagmesser (18) mehrere Schneidkanten (30) gebildet sind.

14. Enbartervorrichtung nach Anspruch 12 oder 13, **dadurch gekennzeichnet, dass** die Schlagmesserkanten mit einem negativem Schneidwinkel (31) versehen sind.

## Claims

1. A method for mechanical removal of a burr (10) generated during autogenous flame cutting on the lower side of a strand cast workpiece (9), by means of a deburring device according to one of claims 5-8 or 9-11, **characterised in that** during the transport of the workpiece on a roller table (8) without stoppage of the workpiece the fly cutters (18) are already in processing position without having to rotate before the deburring process, wherein the position, the form and the size of the burr (10) to be removed are analysed by means of a recognition system (11) positioned beside the roller table (8), composed of a laser triangulation measuring device in association with a 3D camera, and they are computer controlled with precision so that the fly cutters (18) are brought into the place appropriate for the position, the shape and the size of the burr (10) for removing the cutting burrs, and subsequently the fly cutters (18) strike against the oxygen cutting burr (10) of the workpiece (9) by rotation of the fly cutter shaft (4, 23) and thereby remove said burr.

2. The method of claim 1, **characterised in that** the deburring device (1) is brought closer variably to the lower part of workpiece detected just previously by a recognition system (11), namely through the following steps:
- detection of the workpiece (9) before the width of a roller table,
- computing the established deviation from a setpoint value,
- positioning a variable stop (13) of the rotational body (12) of the deburring device (1),
- bringing the deburring device (1) to the exact starting position when reaching the following roller conveyor, namely to the lower part of the workpiece (9) having the burr to be removed (10).

3. The method of claim 1, **characterised in that** the fly cutters (18) are positioned by means of an electromotor, hydraulically or pneumatically by a continuously variable vertical displacement to the burr (10) or to the lower part of workpiece and the position in height of the fly cutters (18) is determined for each new burr location and new burr size.

4. The method of claim 1, **characterised in that** the fly cutters (18) are positioned by vertical displacement by means of an electromotor, pneumatically or hydraulically against the variable stop (13), defined in vertical position, stepwise over the whole processing distance, which stop is moveable by means of an electromotor, hydraulically or pneumatically.

5. A deburring device for mechanical removal of a burr (10) generated during autogenous flame cutting on the lower side of a strand cast workpiece (9), by means of a number of rotating fly cutters (18) arranged circularly, **characterised by** at least one rotational body (12) arranged on a shaft (4), which body consists of two opposite circular rings (17), always divided in several ring segments (16), between which the fly cutters (18) are arranged and directed radially and outwardly and a number of wire rope suspensions (21) are positioned in an elastically resilient way between the shaft (4) and the rotational body (12) with a set prestressing force, moreover through a variable stop (13) to limit the movement of the fly cutter shaft (23) and through a recognition system (11), composed of a laser triangulation measuring device in association with a 3D camera.

6. The deburring device according to claim 5, **characterised in that** the adjacent ring segments (16) are each connected via a locking element (20) to the circular ring (17).

7. The deburring device according to claim 5, **characterised in that** the circular ring (17) individually, or only individual pre-mounted ring segments (16) or individual fly cutters (18) can be assembled, disassembled or replaced independently from one another.

8. The deburring device according to claim 5, **characterised in that** the circular rings (17) carrying fly cutters (18) are prevented from moving axially by the elastically resilient wire rope suspensions (21) with loop-shaped wire ropes (25) tilted inwardly and using mechanical guides (22) fixed to the shaft (4), so that all fly cutters (18) always have the same axial distance relative to one another.

9. A deburring device for mechanical removal of a burr (10) generated during autogenous flame cutting on the lower side of a strand cast workpiece (9), by means of a number of rotating fly cutters (18) arranged circularly, **characterised in that** on a four-sided shaft (23) in its cross-section a first number of wire rope suspensions (21), a second number of wire rope suspensions (21) close to it or offset on the gap with respect to the first number of wire rope suspensions (21) and so on are positioned in an elastically resilient way with a set prestressing force and a fly cutter (18) directed radially and outwardly is arranged at each wire rope suspension (21), as well as a recognition system (11), composed of a laser triangulation measuring device in association with a 3D camera.

10. The deburring device according to claim 9, **characterised in that** the shaft (23) is designed preferably as an eight-sided shaft, whereas four wire rope suspensions (21) are arranged with fly cutters (18) uniformly distributed at the circumference on every second surface of the eight-sided shaft and close to it four additional wire rope suspensions (21) offset by 45° on every second surface of the eight-sided shaft and so on to complete the width of the workpiece (9) to be deburred.

11. The deburring device according to claim 5 or 9, **characterised in that** each wire rope suspension (21) consists of four clamping plates (24) each with hemispherical holding grooves (26) and hemispherical semi-circular grooves (27) at least one wire rope part (25) inlaid therein, which is pressed in and welded on the ends with ferrules (28), whereas the clamping plates (24) are provided with recesses (29) for the ferrules (28) of the wire rope ends.

12. The deburring device according to one of claims 5-8 or 9-11, **characterised in that** the surface of the fly cutter (18) presents cutting sections extending crosswise to the rotating direction and tapering outward, so that several cutting edges (30) are formed on the fly cutter (18).

13. The deburring device according to claim 12, **characterised in that** the cutting edges are broken into several sections or offset to one another, so that several cutting edges (30) are formed on the fly cutter (18).

14. The deburring device according to claim 12 or 13, **characterised in that** the fly cutter edges are provided with a negative cutting angle (31).

## Revendications

1. Procédé pour l'enlèvement mécanique d'une barbe (10) généré pendant l'oxycoupage autogène sur le côté inférieur d'une pièce usinée en continu (9), à l'aide d'un dispositif d'ébarbage selon l'une des revendications 5-8 à 9-11, **caracterisé par le fait que** pendant le transport de la pièce d'usinage sur une table à galets (8) sans arrêt de la pièce d'usinage les fraises à outil saillant (18) sont déjà en position de traitement sans devoir tourner avant le cycle d'ébarbage, dans lequel la position, la forme et la taille de la barbe (10) à enlever sont analysées à l'aide d'un système de reconnaissance disposé à côté de la table à galets (8), système composé d'un dispositif de mesure par triangulation laser en conjonction avec une caméra 3D et ces données sont commandées par ordinateur de façon précise de sorte que les fraises à outil saillant (18) sont amenées à l'endroit convenant à la position, la forme et la taille de la barbe (10) pour enlever les barbes de coupe puis les fraises à outil saillant (18) frappent la barbe d'oxycoupage (10) de la pièce d'usinage (9) par rotation de l'arbre à fraise à outil saillant (4, 23) et ainsi enlèvent ladite barbe.

2. Procédé de la revendication 1, **caractérisé en ce que** le dispositif d'ébarbage (1) est rapproché de façon variable de la partie inférieure de la pièce d'usinage détectée juste avant par un système de reconnaissance (11), à savoir à travers les phases suivantes:
- détection de la pièce d'usinage (9) sur la largeur d'une table à galets,
- calcul de l'écart établi à partir d'une valeur de consigne,
- positionnement d'une butée variable (13) du corps de rotation (12) du dispositif d'ébarbage (1),
- acheminement du dispositif d'ébarbage (1) jusqu'à la position de départ exacte à son arrivée sur le convoyeur à galets suivant, à savoir jusqu'à la partie inférieure de la pièce d'usinage (9) présentant la barbe à enlever (10).

3. Procédé de la revendication 1, **caractérisé en ce que** les fraises à outil saillant (18) sont positionnées à l'aide d'un moteur électrique, hydrauliquement ou pneumatiquement selon un déplacement vertical variable en continu vers la barbe (10) ou vers la partie inférieure de la pièce d'usinage et la position en hauteur des fraises à outil saillant (18) est déterminée pour chaque nouvel emplacement de barbe et nouvelle taille de barbe.

4. Procédé de la revendication 1, **caractérisé en ce que** les fraises à outil saillant (18) sont positionnées selon un déplacement vertical à l'aide d'un moteur électrique, pneumatiquement ou hydrauliquement contre la butée variable (13), définie en position verticale, pas à pas sur toute la distance de traitement, laquelle butée est mobile à l'aide d'un moteur électrique, hydrauliquement ou pneumatiquement.

5. Dispositif d'ébarbage pour l'enlèvement mécanique d'une barbe (10) généré pendant l'oxycoupage autogène sur le côté inférieur d'une pièce usinée en continu (9), à l'aide d'un certain nombre de fraises rotatives à outil saillant (18) agencées de manière circulaire, **caractérisé par** au moins un corps de rotation (12) disposé sur un arbre (4), lequel corps se compose de deux bagues circulaires opposées (17), toujours divisées en plusieurs segments annulaires (16), entre lesquels les fraises à outil saillant (18) sont disposées et dirigées radialement et vers l'extérieur et un certain nombre de suspensions à câble métallique (21) sont positionnés de façon résiliente élastiquement entre l'arbre (4) et le corps de rotation (12) avec une force de précontrainte définie, en outre à travers une butée variable (13) pour limiter le mouvement de l'arbre de fraise à outil saillant (23) et à travers un système de reconnaissance (11), composé d'un dispositif de mesure par triangulation laser en conjonction avec une caméra 3D.

6. Dispositif d'ébarbage selon la revendication 5, **caractérisé en ce que** les segments annulaires adjacents (16) sont chacun connectés par l'intermédiaire d'un élément de verrouillage (20) à la bague circulaire (17).

7. Dispositif d'ébarbage selon la revendication 5, **caractérisé en ce que** la bague circulaire (17) individuellement, ou seulement des segments annulaires individuels prémontés (16) ou des fraises individuelles à outil saillant (18) peuvent être assemblés, démontés ou remplacés indépendamment les uns des autres.

8. Dispositif d'ébarbage selon la revendication 5, **caractérisé en ce que** les bagues circulaires (17) portant les fraises à outil saillant (18) ne peuvent pas se déplacer axialement sous l'effet des suspensions à câble métallique (21) résilientes élastiquement avec des câbles métalliques en forme de boucle (25) inclinées vers l'intérieur et à l'aide de guides mécaniques (22) fixés à l'arbre (4), de sorte que toutes les fraises à outil saillant (18) présentent toujours la même distance axiale l'une par rapport à l'autre.

9. Dispositif d'ébarbage pour l'enlèvement mécanique d'une barbe (10) généré pendant l'oxycoupage autogène sur le côté inférieur d'une pièce usinée en continu (9), à l'aide d'un certain nombre de fraises rotatives à outil saillant (18) agencées de manière circulaire, **caracterisé par le fait que** sur un arbre de section quadrangulaire (23) un premier nombre de suspensions à câble métallique (21), un second nombre de suspensions à câble métallique (21) à proximité ou décalé sur l'espace par rapport au premier nombre de suspensions à câble métallique (21) et ainsi de suite sont positionnés de manière résiliente élastiquement avec une force de précontrainte définie et une fraise à outil saillant (18) dirigée radialement et vers l'extérieur est disposée au niveau de chaque suspension à câble métallique (21), sans oublier un système de reconnaissance (11), composé d'un dispositif de mesure par triangulation laser en conjonction avec une caméra 3D.

10. Dispositif d'ébarbage selon la revendication 9, **caractérisé en ce que** l'arbre (23) est conçu de façon préférentielle comme arbre octogonal, où quatre suspensions à câble métallique (21) sont disposées avec des fraises à outil saillant (18) uniformément distribuées à la circonférence sur une surface sur deux de l'arbre octogonal et à proximité, quatre suspensions à câble métallique supplémentaires (21) décalées de 45° sur une surface sur deux de l'arbre octogonal et ainsi de suite pour parcourir toute la largeur de la pièce d'usinage (9) à débarber.

11. Dispositif d'ébarbage selon la revendication 5 ou 9, **caractérisé en ce que** chaque suspension à câble métallique (21) se compose de quatre plaques de serrage (24), chacune avec des gorges de retenue 26) et des gorges semi-circulaires hémisphériques (27) et au moins une partie de câble métallique (25) incrustée dans celle-ci, qui est comprimée et soudée sur les extémités avec des viroles (28), où les plaques de serrage (24) sont pourvues d'évidements (29) pour les viroles (28) des extrémités de câble métallique.

12. Dispositif d'ébarbage selon l'une des revendications 5-8 ou 9-11, **caractérisé en ce que** la surface de la fraise à outil saillant (18) présente des sections de coupe s'étendant à angle droit de la direction de rotation et allant en se rétrécissant vers l'extérieur, de sorte que plusieurs bords de coupe (30) sont formés sur la fraise à outil saillant (18).

13. Dispositif d'ébarbage selon la revendication 12, **caractérisé en ce que** les bords de coupe sont scindés en plusieurs sections ou décalés l'un par rapport à l'autre de sorte que plusieurs bords de coupe (30) sont formés sur la fraise à outil saillant (18).

14. Dispositif d'ébarbage selon la revendication 12 ou 13, **caractérisé en ce que** les bords de la fraise à outil saillant sont pourvus d'un angle de coupe négatif (31).
